# EUROPEAN PATENT APPLICATION

(11) **EP 1 480 147 A2**
(43) Date of publication of application: **24.11.2004**
(21) Application number: 04252644.2
(22) Date of filing: 06.05.2004
(51) Int. Cl.: G06F 17/60

(54) **Method of delivering an article of commerce, deliverer-side server, and customer-side client computer**

(30) Priority: 20.05.2003 JP 2003142085
(71) Applicant: NTT DoCoMo, Inc., Tokyo 100-6150 (JP)
(72) Inventor: Eguchi, Hisatoshi, NTT DoCoMo Inc., Tokyo 100-6150 (JP); Miura, Fumiaki, NTT DoCoMo Inc., Tokyo 100-6150 (JP)
(74) Representative: Maury, Richard Philip

(57) **Abstract**

A method of delivering an article of commerce is disclosed. The method includes the steps of (a) a customer apparatus transmitting an order for delivery of the article to a deliverer-side apparatus, (b) the deliverer-side apparatus generating a delivery ID based on the order and transmitting the delivery ID to the customer apparatus; (c) the customer apparatus transmitting to a seller-side apparatus a request for the delivery of the article based on the received delivery ID; (d) the seller-side apparatus transmitting a request for the delivery of the article to the deliverer-side apparatus using the delivery ID obtained from the request received from the customer apparatus; (e) the deliverer-side apparatus determining a destination to which the article is to be delivered based on the delivery ID obtained from the request received from the seller-side apparatus; and (f) the deliverer-side apparatus implementing a procedure for delivering the article to the destination.

## Description

### BACKGROUND OF THE INVENTION

### 1. Field of the Invention

The present invention relates generally to methods of delivering an article of commerce, apparatuses on the deliverer side, and apparatuses on the customer side, and more particularly to a method of delivering an article of commerce, an apparatus on the deliverer side, and apparatus on the customer side that can prevent leakage (disclosure) of personal information to a seller at the time of purchasing an article of commerce.

### 2. Description of the Related Art

A service to deliver an article of commerce from a sales shop at which the article is purchased has been used so that a customer purchasing the article does not have to bring back the article by her/himself. In the case of using this service, in order for the purchased article to be delivered, the customer is required to inform the shop of her/his private information (personal information) such as a name and a telephone number in addition to an address to which the purchased article is to be delivered (a delivery address). The shop arranges that the article be delivered to the specified address based on the information obtained from the customer. At this point, most sales shops only request a delivery company (deliverer) to deliver the purchased article to the address specified at the time of ordering. It is the deliverer that actually delivers the article to the customer. The customer may have the purchased article delivered to a place other than her/his present address by specifying a convenience store, a locker at a station, or a post-office box as the delivery address. In this case, the customer may go to the place to receive the article by her/himself. Such a service is disclosed by, for instance, http://www.kuronekoyamato.co.jp/sikumi/study/std-ver/index.html of on or before May 20, 2003.

Thus, when the customer has the article delivered, the information identifying the customer her/himself is required to ensure safe delivery of the article. This means that the shop may know the personal information of the customer at the same time. Accordingly, there is a fear that such personal information may be leaked to be misused.

In this respect, for instance, Japanese Laid-Open Patent Application No. 2001-195454 proposes an electronic commerce (mail-order sales) system that makes it possible to purchase an article of commerce while keeping personal information secret (undisclosed). According to this system, when a user (customer) purchases an article of commerce using the Internet, the user registers her/his personal information with an Internet mail-order sales center, which in return, issues an ID number and a password for identifying the registered user. The user purchases the article from an Internet mail-order sales company using the ID number and password issued by the Internet mail-order sales center. Thus, according to this system, the user can prevent her/his personal information from being leaked to be misused at the time of purchasing an article of commerce using the Internet.

According to the above-described conventional system (method), personal information is registered with the Internet mail-order sales center. Accordingly, there is no concern for information security insofar as the personal information is used completely inside the Internet mail-order sales center for customer management, for instance. However, there is the problem that the obtained personal information may be distributed on the Internet to be leaked to a third party or other sales shops by a person with malicious intent in the Internet mail-order sales center.

### SUMMARY OF THE INVENTION

Accordingly, it is a general object of the present invention to provide a method of delivering an article of commerce, an apparatus on the deliverer side, and an apparatus on the customer side in which the above-described disadvantage is eliminated.

A more specific object of the present invention is to provide a method of delivering an article of commerce, an apparatus on the deliverer side, and an apparatus on the customer side that make it possible to deliver a purchased article of commerce to a specified delivery address without informing a seller of personal information.

The above objects of the present invention are achieved by a method of delivering an article of commerce using a customer apparatus on a customer side, a seller-side apparatus on a seller side, and a deliverer-side apparatus on a deliverer side, the method including the steps of: (a) the customer apparatus transmitting an order for delivery of the article to the deliverer-side apparatus; (b) the deliverer-side apparatus generating a delivery ID based on the order and transmitting the delivery ID to the customer apparatus; (c) the customer apparatus transmitting to the seller-side apparatus a request for the delivery of the article based on the delivery ID received from the deliverer-side apparatus; (d) the seller-side apparatus transmitting a request for the delivery of the article to the deliverer-side apparatus using the delivery ID obtained from the request received from the customer apparatus; (e) the deliverer-side apparatus determining a destination to which the article is to be delivered based on the delivery ID obtained from the request received from the seller-side apparatus; and (f) the deliverer-side apparatus implementing a procedure for delivering the article to the determined destination.

According to the above-described method, the seller-side apparatus requested by the customer to deliver an article of commerce is informed of the delivery ID provided from the deliverer-side apparatus. As a result, the seller is prevented from obtaining the personal information of the customer, such as her/his address. Further, the personal information of the customer may be possessed by only the deliverer, which actually needs the information to deliver the article to the customer. As a result, it is difficult for the seller to identify the customer. Thus, a highly secure delivery service can be provided.

In the above-described method, the article of commerce may be a tangible object, which may be delivered to a specified location by the procedure.

In the above-described method, the article of commerce may be digital content, which may be distributed to a specified address.

The above objects of the present invention are also achieved by an apparatus on a deliverer side capable of implementing a procedure for delivering an article of commerce, including: a delivery order reception part configured to receive an order for delivery of the article; a delivery ID generation part configured to generate a delivery ID based on the received order; a delivery ID provision part configured to transmit the delivery ID to a customer apparatus on a customer side; a delivery request reception part configured to receive a request for the delivery of the article; a delivery destination determination part configured to determine a destination to which the article is to be delivered based on the delivery ID obtained from the request for the delivery of the article; and a delivery implementation part configured to implement the procedure for delivering the article to the determined destination.

The above objects of the present invention are also achieved by an apparatus on a customer side capable of implementing a procedure for delivering an article of commerce, including a delivery request part configured to transmit to a seller-side apparatus on a seller side a request for delivery of the article based on a delivery ID.

The above objects of the present invention are further achieved by a system for delivering an article of commerce, including: a customer apparatus on a customer side; a deliverer-side apparatus on a deliverer side; and a seller-side apparatus on a seller side, wherein: the deliverer-side apparatus includes: a delivery order reception part configured to receive an order for delivery of the article from the customer apparatus; a delivery ID generation part configured to generate a delivery ID based on the received order; a delivery ID provision part configured to transmit the delivery ID to the customer apparatus; a delivery request reception part configured to receive a request for the delivery of the article from the seller-side apparatus; a delivery destination determination part configured to determine a destination to which the article is to be delivered based on the delivery ID obtained from the request received from the seller-side apparatus; and a delivery implementation part configured to implement the procedure for delivering the article to the determined destination; the customer apparatus includes: a delivery order part configured to generate and transmit the order for the delivery of the article to the deliverer-side apparatus; and a delivery request part configured to generate and transmit to the seller-side apparatus a request for the delivery of the article based on the delivery ID received from the deliverer-side apparatus; the seller-side apparatus includes a delivery request part configured to generate and transmit to the deliverer-side apparatus the request for the delivery of the article using the delivery ID obtained from the request received from the customer apparatus; and the customer apparatus, the deliverer-side apparatus, and the seller-side apparatus are connected via a network using an electrical signal.

### BRIEF DESCRIPTION OF THE DRAWINGS

Other objects, features and advantages of the present invention will become more apparent from the following detailed description when read in conjunction with the accompanying drawings, in which:
FIG. 1 is a schematic diagram showing an article delivery system to which a method of delivering an article of commerce according to an embodiment of the present invention is applied;
FIG. 2 is a functional block diagram showing a configuration of a customer terminal according to the present invention;
FIG. 3 is a functional block diagram showing a configuration of a deliverer-side apparatus according to the present invention;
FIG. 4 is a functional block diagram showing a configuration of a seller-side apparatus according to the present invention;
FIG. 5 is a sequence diagram for illustrating an operation of the article delivery system according to a first embodiment of the present invention;
FIG. 6 is a sequence diagram for illustrating an operation of the article delivery system according to a second embodiment of the present invention;
FIG. 7 is a sequence diagram for illustrating an operation of the article delivery system according to a third embodiment of the present invention;
FIG. 8 is a sequence diagram for illustrating an operation of the article delivery system according to a fourth embodiment of the present invention;
FIG. 9 is a sequence diagram for illustrating an operation of the article delivery system according to a fifth embodiment of the present invention;
FIG. 10 is a sequence diagram for illustrating an operation of the article delivery system according to a sixth embodiment of the present invention;
FIG. 11 is a sequence diagram for illustrating an operation of the article delivery system according to a seventh embodiment of the present invention;
FIG. 12 is a sequence diagram for illustrating an operation of the article delivery system according to an eighth embodiment of the present invention;
FIG. 13 is a sequence diagram for illustrating an operation of the article delivery system according to a ninth embodiment of the present invention; and
FIG. 14 is a sequence diagram for illustrating an operation of the article delivery system according to a tenth embodiment of the present invention.

### DETAILED DESCRIPTION OF THE PREFERRED EMBODIMENTS

A description is given, with reference to the accompanying drawings, of embodiments of the present invention.

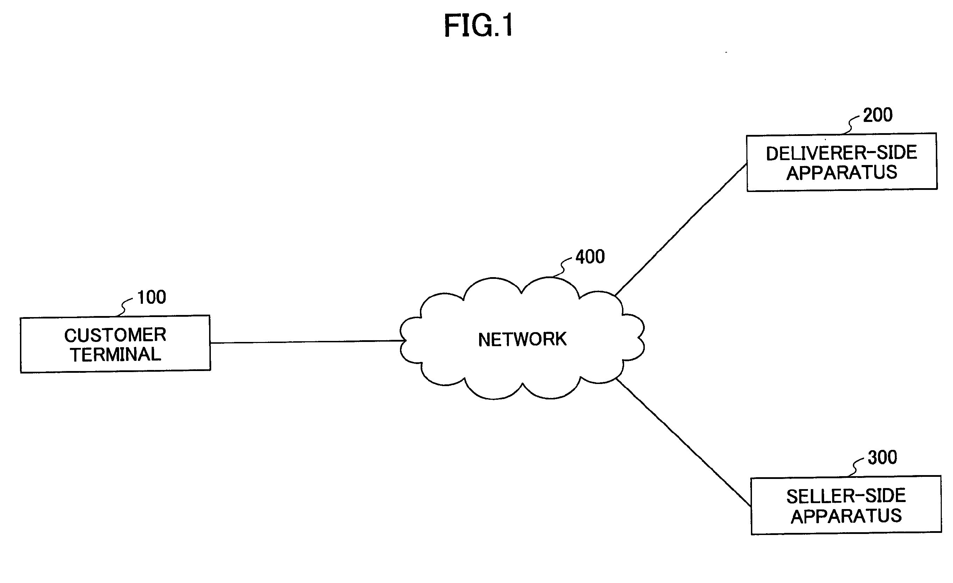

FIG. 1 is a schematic diagram showing a system for delivering an article of commerce (an article delivery system) to which a method of delivering an article of commerce according to an embodiment of the present invention is applied. In the following drawings, the same elements are referred to by the same numerals.

Referring to FIG. 1, the system includes an apparatus on the customer side (hereinafter referred to as a customer terminal) 100, an apparatus on the deliverer side (hereinafter, a deliverer-side apparatus) 200, and an apparatus on the seller side (hereinafter, a seller-side apparatus) 300. Communications are performable among the customer terminal 100, the deliverer-side apparatus 200, and the seller-side apparatus 300 via a network 400 such as the Internet. The customer terminal 100, which is a mobile terminal such as a cellular phone, a personal digital assistant (PDA) , or a notebook personal computer, is used when a customer selects and orders an article of commerce. The deliverer-side apparatus 200, which is composed of an information processing apparatus such as a server, has the function of providing the customer with a delivery ID necessary for delivering the article and the function of having a deliverer (delivery company) deliver the article to an address (destination) specified by the delivery ID (a delivery address). The deliverer-side apparatus 200 is installed on the deliverer side. The seller-side apparatus 300, which is composed of an information processing apparatus such as a server, has the function of informing the deliverer-side apparatus 200 of the delivery ID obtained from a customer's request for delivery of the article. The seller-side apparatus 300 is installed on the seller-side. The network 400 is the Internet.

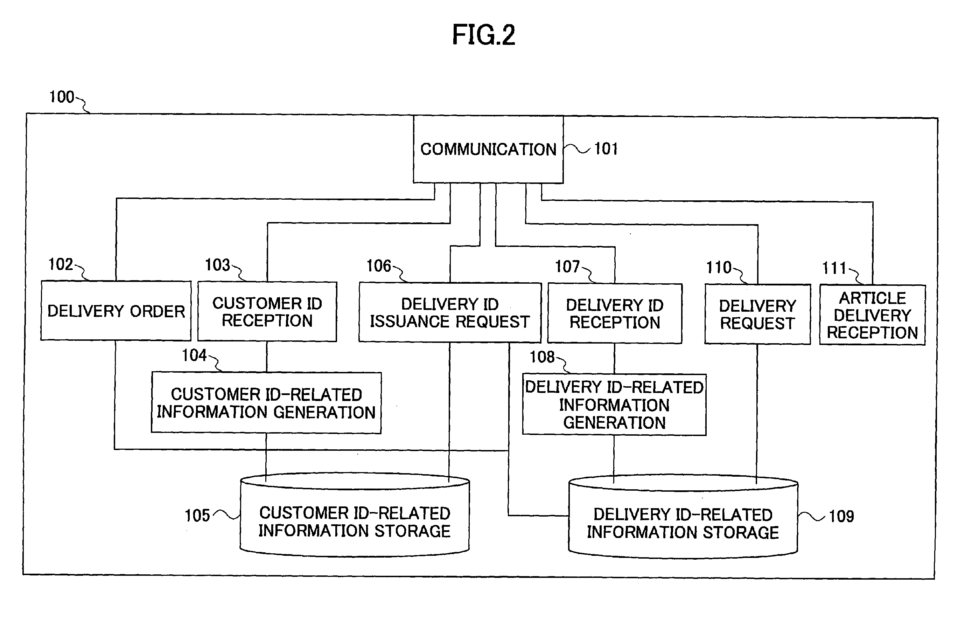

FIG. 2 is a functional block diagram showing a configuration of the customer terminal 100 shown in FIG. 1.

Referring to FIG. 2, the customer terminal 100 includes a communication part 101, a delivery order part 102, a customer ID reception part 103, a customer ID-related information generation part 104, a customer ID-related information storage part 105, a delivery ID issuance request part 106, a delivery ID reception part 107, a delivery ID-related information generation part 108, a delivery ID-related information storage part 109, a delivery request part 110, and an article delivery reception part 111.

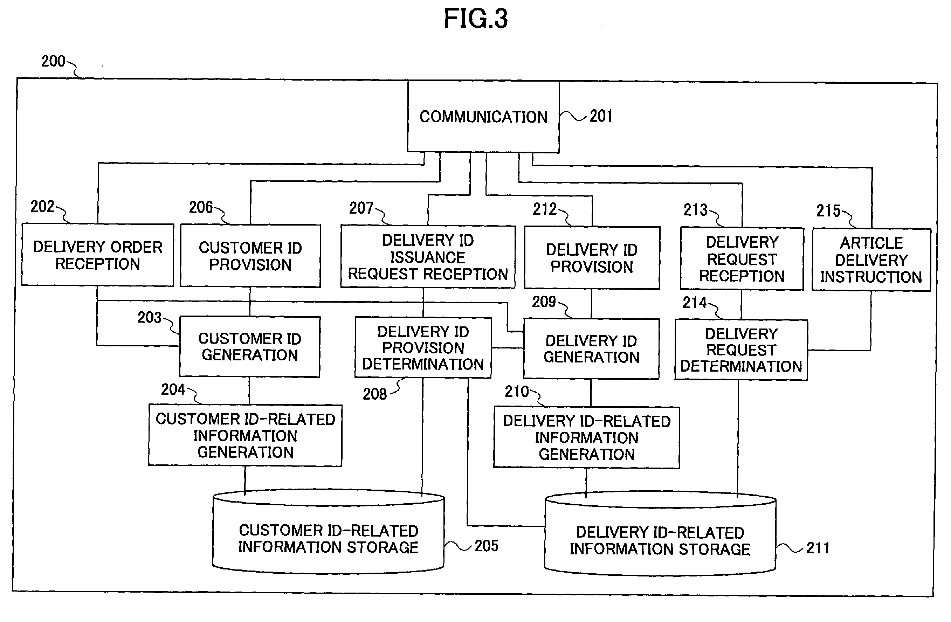

FIG. 3 is a functional block diagram showing a configuration of the deliverer-side apparatus 200 shown in FIG. 1.

Referring to FIG. 3, the deliverer-side apparatus 200 includes a communication part 201, a delivery order reception part 202, a customer ID generation part 203, a customer ID-related information generation part 204, a customer ID-related information storage part 205, a customer ID provision part 206, a delivery ID issuance request reception part 207, a delivery ID provision determination part 208, a delivery ID generation part 209, a delivery ID-related information generation part 210, a delivery ID-related information storage part 211, a delivery ID provision part 212, a delivery request reception part 213, a delivery request determination part 214, and an article delivery instruction part 215.

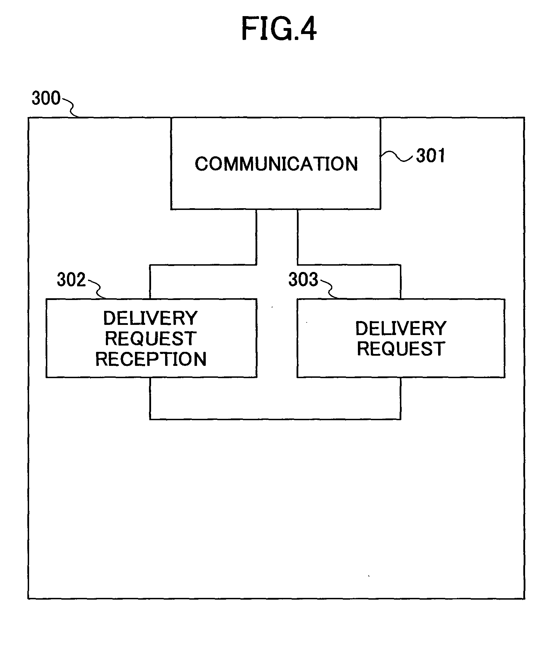

FIG. 4 is a functional block diagram showing a configuration of the seller-side apparatus 300 shown in FIG. 1.

Referring to FIG. 4, the seller-side apparatus 300 includes a communication part 301, a delivery request reception part 302, and a delivery request part 303.

Next, a description is given of the operation of the article delivery system.

### [First Embodiment]

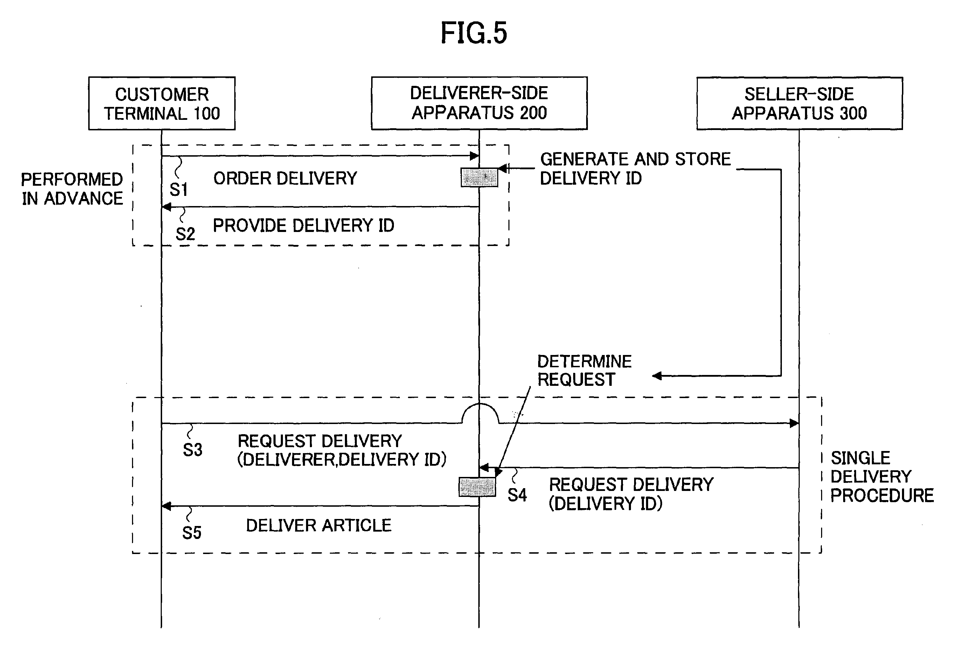

First, a description is given, with reference to FIG. 5, of a first embodiment according to the present invention.

FIG. 5 is a sequence diagram for illustrating an operation of the system according to the first embodiment of the present invention. Here, the operation is divided into a preliminary operation up to the issuance of a delivery ID to a customer who intends to have an article of commerce delivered and a delivery procedure operation implementing a procedure for delivering the article using the delivery ID, which are separately described below. Hereinafter, it is assumed that the customer terminal 100, the deliverer-side apparatus 200, and the seller-side apparatus 300 communicate with one another via the network 400.

### (Preliminary Operation)

First, in step S1 of FIG. 5, a customer who is considering purchasing an article of commerce operates the customer terminal 100 and places an order with the deliverer-side apparatus 200 for delivery. Specifically, delivery order information generated in the delivery order part 102 of the customer terminal 100 is transmitted via the communication part 101 thereof to the deliverer-side apparatus 200. The delivery order information includes the personal information of the customer, such as her/his address, name, and telephone number forming a delivery address to which the article is to be delivered.

The delivery order information transmitted from the customer terminal 100 is received by the delivery order reception part 202 of the deliverer-side apparatus 200. Thereafter, it is determined according to predetermined criteria whether to provide a delivery service to the customer who has placed the order for delivery. If the delivery service is authorized, the delivery ID generation part 209 generates a delivery ID to the customer. Thereafter, the generated delivery ID and the personal information of the customer are correlated with each other by the delivery ID-related information generation part 210 to be stored in the delivery ID-related information storage part 211 as delivery ID-related information.

On the other hand, the generated delivery ID is sent to the delivery ID provision part 212. Then, after being converted into a predetermined transmission format by the delivery ID provision part 212, in step S2, the delivery ID is transmitted via the communication part 201 of the deliverer-side apparatus 200 to the customer apparatus 100 (the provision of the delivery ID).

The delivery ID thus transmitted to the customer terminal 100 is received by the delivery ID reception part 107 of the customer terminal 100. Thereafter, the delivery ID-related information generation part 108 stores the delivery ID and information relating to the delivery ID in the delivery ID-related information storage part as delivery ID-related information. Thereby, the preliminary operation is completed.

Next, a description is given of the delivery procedure operation.

### (Delivery Procedure Operation)

Next, in step S3, the customer operates the customer terminal 100 to make a request to a seller for delivery of the article. Specifically, the delivery request part 110 of the customer terminal 100 extracts the delivery ID stored in the delivery ID-related information storage part 109, and transmits the request for delivery of the article (delivery request) based on the received delivery ID to the seller-side apparatus 300 via the communication part 101. The delivery request may be transmitted simultaneously with the delivery ID from the customer terminal 100. Alternatively, it is also possible to convert the delivery ID into the delivery request in accordance with a predetermined algorithm and transmit the delivery request.

The delivery request reception part 302 of the seller-side apparatus 300 receives the request for delivery of the article and the delivery ID transmitted from the customer terminal 100 through the communication part 301, and outputs the delivery request and the delivery ID to the delivery request part 303. Then, in step S4, the delivery request part 303 transmits a request for delivery of the article and the delivery ID to the deliverer-side apparatus 200 via the communication part 301.

The delivery request reception part 213 of the deliverer-side apparatus 200 receives the request for delivery of the article and the delivery ID, and outputs the delivery request and the delivery ID to the delivery request determination part 214. The delivery request determination part 214 determines whether to deliver the article, using the received delivery ID. Here, the delivery request determination part 214 determines whether the received delivery ID exists in the delivery ID-related information stored in the delivery ID-related information storage part 211. As a result of the determination, if the delivery ID exists, in step S5, the article delivery instruction part 215 presents the deliverer with the delivery address corresponding to the delivery ID, and the deliverer delivers the article to the presented delivery address.

Thus, according to the first embodiment of the present invention, a customer registers her/his delivery address with the deliverer-side apparatus 200 of a deliverer in advance, and has an ID correlated with the delivery address issued by the deliverer-side apparatus 200. At the time of having an article of commerce delivered, the customer informs a seller of not her/his personal information such as her/his name and telephone number but the ID issued by the deliverer-side apparatus 200. That is, the personal information necessary for delivery of the article is gathered at only the deliverer-side apparatus 200 issuing the delivery ID, and is prevented from reaching the seller. Accordingly, the secrecy (privacy) of the personal information of a customer at the time of article delivery can be increased. Further, since the personal information is prevented from reaching the general public, it is possible to prevent an unwanted distribution of the personal information.

According to this embodiment, it is assumed that an article of commerce is a tangible object, and the deliverer delivers an article of commerce whose delivery has been requested to a specified location. However, the article of commerce according to the present invention is not limited to a tangible object, and may be digital content. In this case, an article of commerce for which delivery procedure has been implemented is distributed to the customer terminal 100 via the network 400.

### [Second Embodiment]

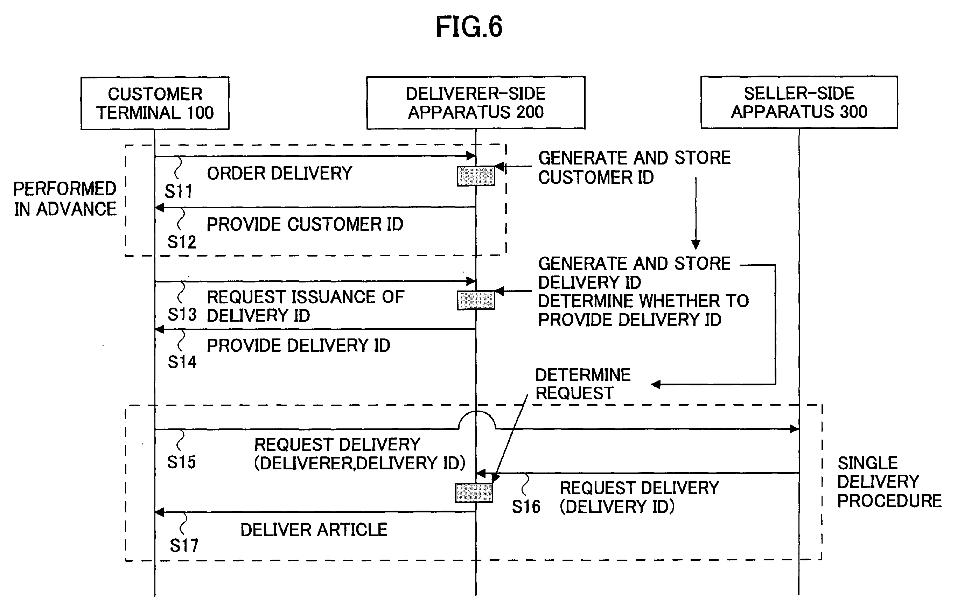

Next, a description is given, with reference to FIG. 6, of a second embodiment according to the present invention.

According to the first embodiment, a single delivery ID may continue to be used unless the delivery ID is changed. Accordingly, there is a risk that the customer corresponding to the delivery ID may be identified. The second embodiment achieves an improvement in this respect.

FIG. 6 is a sequence diagram for illustrating an operation of the article delivery system according to the second embodiment of the present invention. Here, as in the first embodiment, the operation is divided into the preliminary operation and the delivery procedure operation, and those operations are described separately.

### (Preliminary Operation)

First, in step S11 of FIG. 6, the delivery order part 102 of the customer terminal 100 transmits delivery order information to the deliverer-side apparatus 200. According to this embodiment, the delivery order information includes information for identifying the customer her/himself, such as an official certificate or official identification (for instance, a driver's license or a passport), in addition to the personal information of the customer, such as her/his name, address, telephone number, and birth date. The official certificate or identification is read with, for instance, an image reader provided to the customer terminal 100, and is transmitted as image information.

The delivery order information is received by the delivery order reception part 202 of the deliverer-side apparatus 200. Thereafter, the delivery order reception part 202 checks the identity of the customer based on the received delivery order information. If the identity of the customer is confirmed, the customer ID generation part 203 generates a customer ID for identifying the customer. The generated customer ID and the personal information of the customer are correlated with each other by the customer ID-related information generation part 204 to be stored in the customer ID-related information storage part 205 as customer ID-related information.

On the other hand, the customer ID generated by the customer ID generation part 203 is converted into a predetermined transmission format by the customer ID provision part 206, and thereafter, in step S12, is transmitted via the communication part 201 to the customer apparatus 100 (the provision of the customer ID) . At this point, the customer terminal 100 may receive a password for obtaining a delivery ID used in the subsequent delivery procedure simultaneously with the customer ID.

The customer ID thus transmitted to the customer terminal 100 is received by the customer ID reception part 103. Thereafter, the customer ID and the personal information of the customer are correlated with each other by the customer ID-related information generation part 104 to be stored in the customer ID-related information storage part 105 as customer ID-related information. Thereby, the preliminary operation is completed.

### (Delivery procedure operation)

Next, a description is given of the delivery procedure operation.

Next, in step S13, the customer operates the customer terminal 100 to transmit a request for issuance of a delivery ID (a delivery ID issuance request), which request includes the customer ID, and the password to the deliverer-side apparatus 200 at any time. Specifically, the delivery ID issuance request and the password are output by the delivery ID issuance request part 106 of the customer terminal 100 to be transmitted to the deliverer-side apparatus 200 via the communication part 101.

The delivery ID issuance request and the password are received by the delivery ID issuance request reception part 207 of the deliverer-side apparatus 200 to be output therefrom to the delivery ID provision determination part 208. The delivery ID provision determination part 208 determines whether the customer who has placed the delivery order is a legitimate customer from the customer ID obtained from the delivery ID issuance request, the password, and the customer ID-related information stored in the customer ID-related information storage part 205. If the customer is authenticated, the delivery ID provision determination part 208 generates a delivery ID.

Thereafter, as in the first embodiment, the delivery ID thus generated and a specified delivery address are correlated with each other to be stored in the delivery ID-related information storage part 211 as delivery ID-related information. According to this embodiment, the delivery ID can be updated whenever the delivery ID issuance request is transmitted from the customer terminal 100. Accordingly, it is considered sufficient to store the delivery ID temporarily instead of permanently in this case.

In step S14, the delivery ID is transmitted to the customer terminal 100 as in the first embodiment. Thereafter, the customer operates the customer terminal 100 to make a request to the seller for delivery of the article. The operations of subsequent steps S15 through S17 are equal to the operations of steps S3 through S5, respectively, of the first embodiment, and a description thereof is omitted.

Thus, according to the second embodiment of the present invention, it is not the delivery ID but the customer ID that the deliverer-side apparatus 200 provides to the customer in order to uniquely determine the customer. The customer can have the delivery ID provided thereto at a desired time by prompting the deliverer-side apparatus 200 to issue the delivery ID at any time using the customer ID. That is, it is possible to update the delivery ID periodically. Accordingly, it is possible to avoid continuous use of the provided delivery ID, thus preventing the risk that the customer may be identified by the delivery ID. Further, the customer ID and the customer ID-related information shared by the deliverer-side apparatus 200 and the customer terminal 100 are used in requesting issuance of the delivery ID. Accordingly, processing for authenticating the customer is reduced compared with the time of placing the initial delivery order, thus reducing time and trouble of the customer at the time of making the delivery ID issuance request.

### [Third Embodiment]

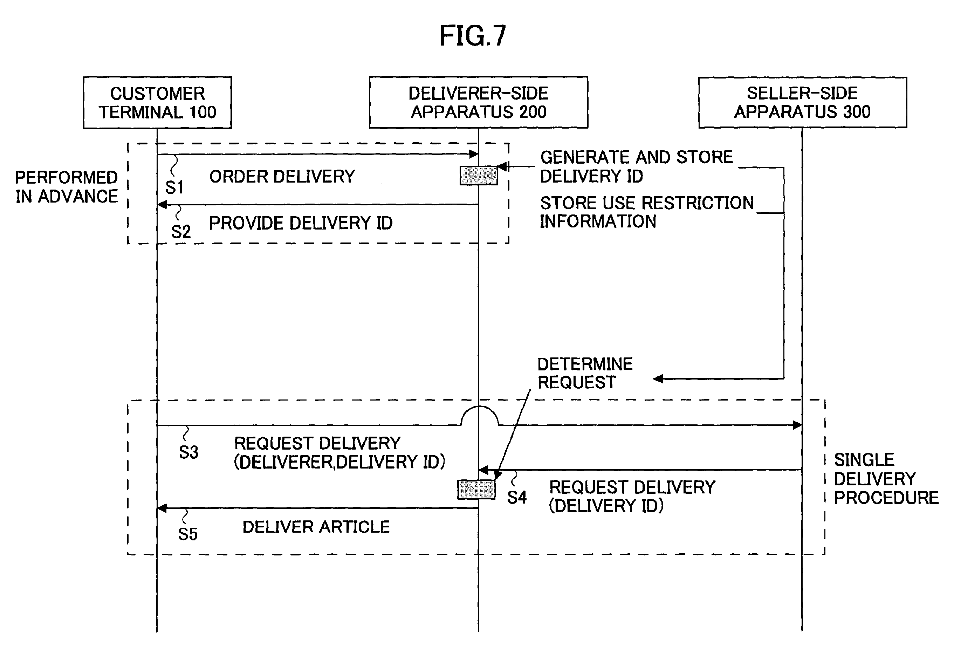

Next, a description is given, with reference to FIG. 7, of a third embodiment according to the present invention.

According to the second embodiment, the delivery ID may be updated anytime by making the delivery ID issuance request based on the customer ID. In this case, however, many shops may continue to use the same delivery ID unless the customer voluntarily updates the delivery ID. As a result, in the case of a customer who is unaware of the necessity of changing (updating) the delivery ID, the customer may be identified from the unchanged delivery ID. The third embodiment achieves an improvement in this respect.

The third embodiment is an improvement on the first embodiment. FIG. 7 is a sequence diagram for illustrating an operation of the article delivery system according to the third embodiment of the present invention. In FIG. 7, the same elements as those of FIG. 5 are referred to by the same numerals, and a description thereof is omitted.

According to the third embodiment, a restriction is imposed on use of the delivery ID provided to the customer terminal 100 so as to prevent continuous use of the same delivery ID. This restriction of use may be the number of times the delivery ID can be used, a period for which the delivery ID can be used, or a date until which the delivery ID can be used. For instance, the restriction of use may be set so that the delivery ID may be used only once, only for 30 days, or only until March 31, 2003. Alternatively, the restriction of use may be placed so that the delivery ID may be used only when the delivery address of an article of commerce is an office or may be used by only a predetermined sales shop.

Referring to FIG. 7, when the delivery ID is generated, the delivery ID-related information is correlated further with use restriction information by the delivery ID-related information generation part 210 of the deliverer-side apparatus 200 to be stored in the delivery ID-related information storage part 211. Thereafter, when the delivery request is transmitted from the customer terminal 100 via the seller-side apparatus 300 (steps S3 and S4), the delivery request determination part 214 of the deliverer-side apparatus 200 accesses the delivery ID-related information storage part 211 to determine whether the validity date of the delivery ID obtained from the delivery request has expired. If the validity date of the delivery ID has expired, the delivery request determination part 214 informs the customer terminal 100 that the delivery ID obtained from the delivery request is unusable. If the customer makes a request for article delivery thereafter, the customer should update the delivery ID. That is, it is possible to prompt a customer who is unaware of the necessity of changing the delivery ID to change the delivery ID, consequently preventing a third party with malicious intent from identifying the customer. As a result, it is possible to provide a safer article delivery system to the customer.

### [Fourth Embodiment]

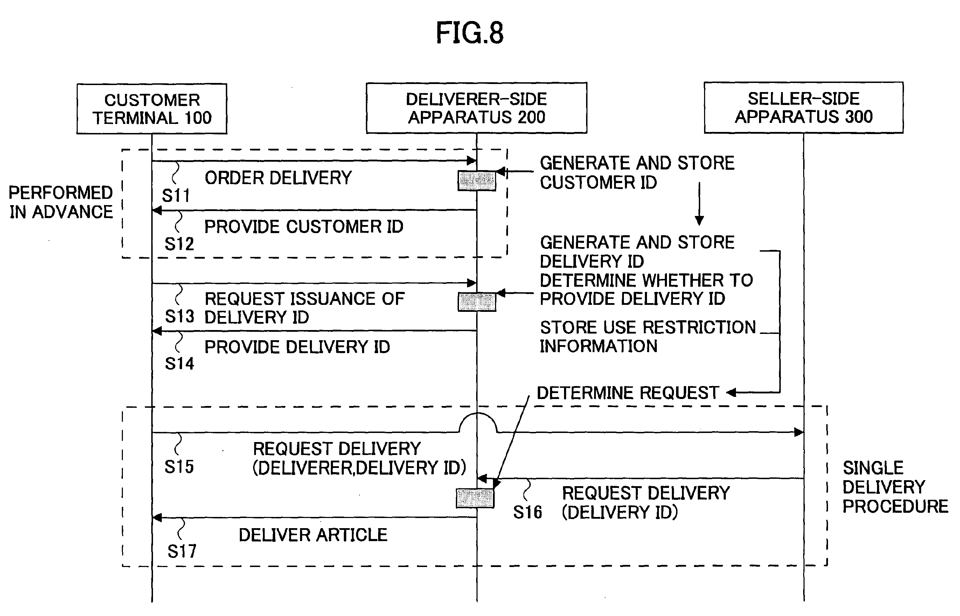

Next, a description is given, with reference to FIG. 8, of a fourth embodiment according to the present invention. FIG. 8 is a sequence diagram for illustrating an operation of the article delivery system according to the fourth embodiment. In FIG. 8, the same elements as those of FIG. 6 are referred to by the same numerals, and a description thereof is omitted.

The fourth embodiment is an improvement on the second embodiment of FIG. 6. Referring to FIG. 8, when the delivery ID is generated, the delivery ID-related information is correlated further with use restriction information by the delivery ID-related information generation part 210 of the deliverer-side apparatus 200 to be stored in the delivery ID-related information storage part 211. Thus, as in the third embodiment, a restriction is imposed on use of the delivery ID provided to the customer terminal 100 so as to prevent continuous use of the same delivery ID. As a result, the same effects as in the third embodiment can be produced.

### [Fifth Embodiment]

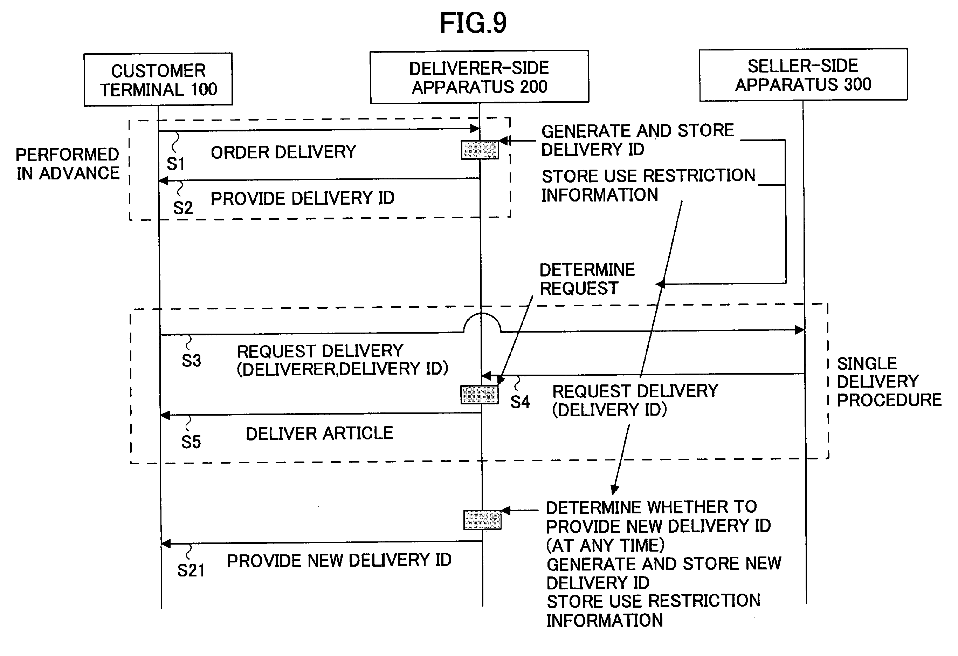

Next, a description is given, with reference to FIG. 9, of a fifth embodiment according to the present invention.

In the third embodiment, after placing a delivery order, the customer understands that the delivery ID is unusable only when the deliverer-side apparatus 200 informs the customer that the deliverer-side apparatus 200 cannot accept the delivery order. That is, although the delivery of an article of commerce has been requested, processing for reproviding the delivery ID has to be performed. The customer needs to know whether the delivery ID is usable before placing an order for delivery of an article of commerce so as to avoid unnecessary procedures as much as possible. The fifth embodiment achieves an improvement in this respect.

The fifth embodiment is an improvement on the third embodiment. FIG. 9 is a sequence diagram for illustrating an operation of the article delivery system according to the fifth embodiment. In FIG. 9, the same elements as those of FIG. 7 are referred to by the same numerals, and a description thereof is omitted.

According to the fifth embodiment, the delivery ID provision determination part 208 of the deliverer-side apparatus 200 determines, at any time, whether the delivery ID is usable based on the use restriction information of the delivery ID stored in the delivery ID-related information storage part 211. According to this determination, the delivery ID may be determined to be unusable and a new delivery ID may be issued when the delivery ID has been used more than the number of times the delivery ID is allowed to be used. Alternatively, the delivery ID may be determined to be unusable and a new delivery ID may be issued when the delivery ID is likely to pass the date until which the delivery ID is allowed to be used.

Referring to FIG. 9, when the customer places a delivery order, the delivery ID provision determination part 208 of the deliverer-side apparatus 200 determines according to a criterion as described above whether to provide a new delivery ID to the customer having the delivery ID based on the delivery 10-related information in which the delivery ID and its use restriction information are correlated, the delivery ID-related information being stored in the delivery ID-related information storage part 211 at the time of providing the delivery ID. If it is determined that a new delivery ID is to be provided, the delivery ID generation part 209 generates a new delivery ID, and in step S21, the new delivery ID is provided to the customer. Except this operation, the same operation as that of the third embodiment is performed.

Thus, according to the fifth embodiment, it is determined whether to provide a new delivery ID based on the use restriction information of the delivery ID. As a result, when the delivery ID of the customer has expired, a new delivery ID may be automatically provided to the customer so that the customer can implement a procedure for delivery of an article with the new delivery ID before the customer implements the procedure with the delivery ID that has expired. This saves the customer from implementing a procedure for reprovision of the delivery ID.

### [Sixth Embodiment]

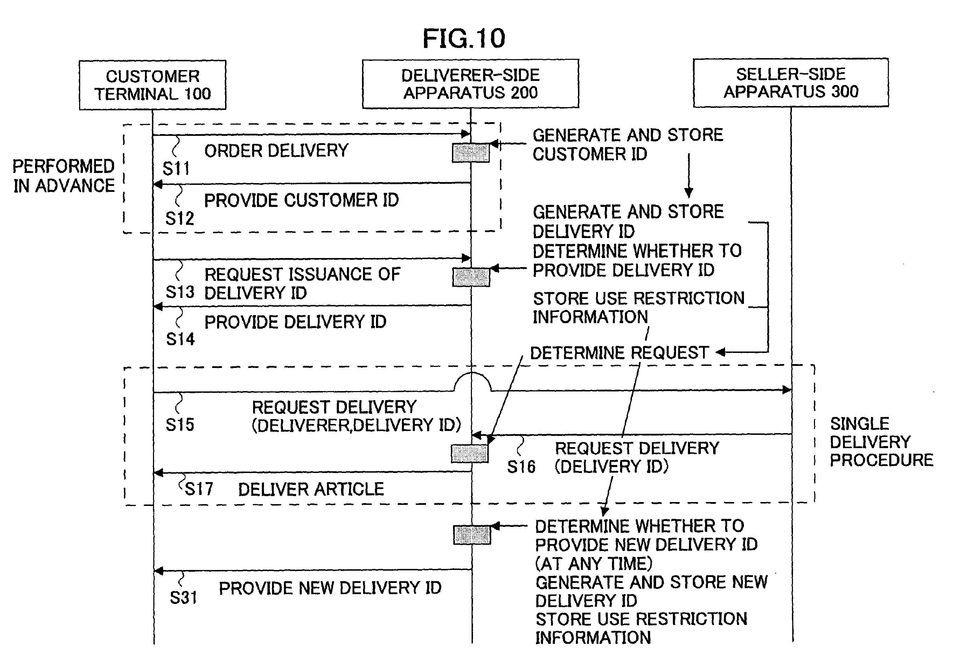

Next, a description is given, with reference to FIG. 10, of a sixth embodiment according to the present invention.

The sixth embodiment is an improvement on the fourth embodiment. FIG. 10 is a sequence diagram for illustrating an operation of the article delivery system according to the sixth embodiment. In FIG. 10, the same elements as those of FIG. 8 are referred to by the same numerals, and a description thereof is omitted.

As in the fifth embodiment, it is determined, at any time, whether to provide a new delivery ID based on the use restriction information of the delivery ID stored in the delivery ID-related information storage part 211. If it is determined that a new delivery ID is to be provided, the delivery ID generation part 209 generates a new delivery ID, and in step S31, the new delivery ID is provided to the customer. As a result, the same effect as in the fifth embodiment can be produced.

### [Seventh Embodiment]

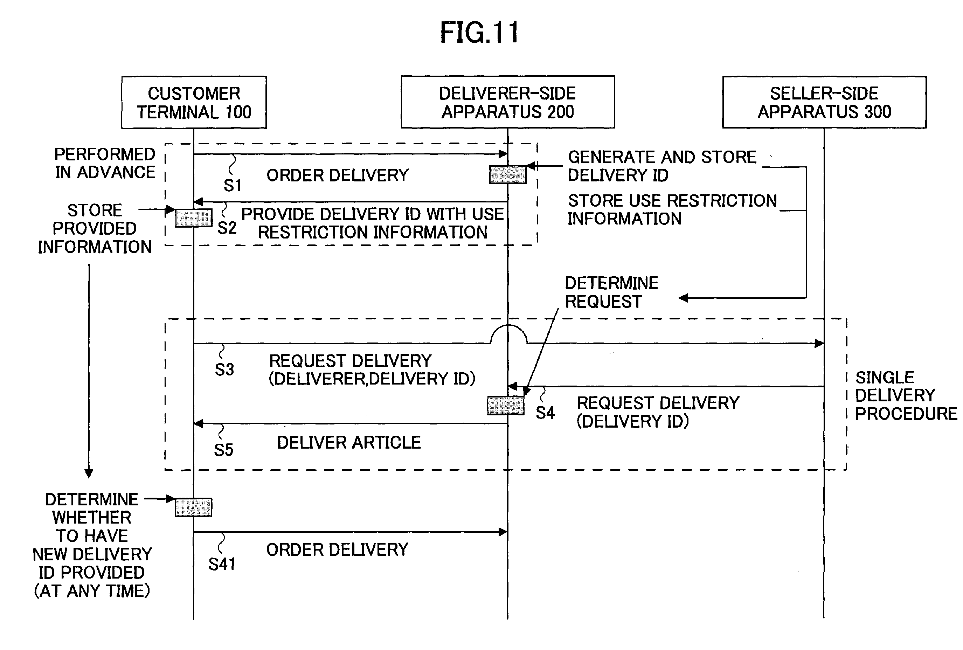

Next, a description is given, with reference to FIG. 11, of a seventh embodiment according to the present invention.

In the fifth embodiment, the deliverer-side apparatus 200 unilaterally issues the delivery ID to the customer terminal 100. As a result, the customer terminal 100 is prevented from knowing an exact use restriction on the delivery ID. That is, there is a problem in that the customer terminal 100 has to inquire of the deliverer-side apparatus 200 the use restriction information of the delivery ID by some means or other in the case of confirming an exact use restriction on the delivery ID. The seventh embodiment achieves an improvement in this respect. The seventh embodiment is an improvement on the third embodiment. FIG. 11 is a sequence diagram for illustrating an operation of the article delivery system according to the seventh embodiment. In FIG. 11, the same elements as those of FIG. 7 are referred to by the same numerals, and a description thereof is omitted.

According to the seventh embodiment, when the deliverer-side apparatus 200 provides the delivery ID to the customer terminal 100, the delivery ID is correlated with its use restriction information.

Referring to FIG. 11, when the delivery ID provision part 212 of the deliverer-side apparatus 200 provides the delivery ID to the customer in step S2, the delivery ID provision part 212 correlates the delivery ID with its use restriction information before providing the delivery ID to the customer. In this correlation, the delivery ID and its use restriction information may exist separately, or the use restriction information may be known by referring to the delivery ID. The delivery ID and its use restriction information may be transmitted to the customer terminal 100 in either mode.

The delivery ID and its use restriction information thus transmitted from the deliverer-side apparatus 200 are received by the delivery ID reception part 107 of the customer terminal 100 to be stored in the delivery ID-related information storage part 109 as the delivery ID-related information by the delivery ID-related information generation part 108.

The delivery order part 102 of the customer terminal 100 accesses the delivery ID-related information storage part 109 at any time, and determines whether to have a new delivery ID provided based on the use restriction information of the delivery ID stored therein. In this determination, it is determined, for instance, whether the validity date of the delivery ID has expired, or whether the validity date of the delivery ID is going to expire soon. As a result, if it is determined that a new delivery ID is to be provided, in step S41, the delivery order part 102 places an order with the deliverer-side apparatus 200 for delivery via the communication part 101.

Thus, according to the seventh embodiment, by confirming a use restriction on a provided delivery ID, the customer terminal 100 can update the delivery ID at a desired time before the delivery ID expires.

### [Eighth Embodiment]

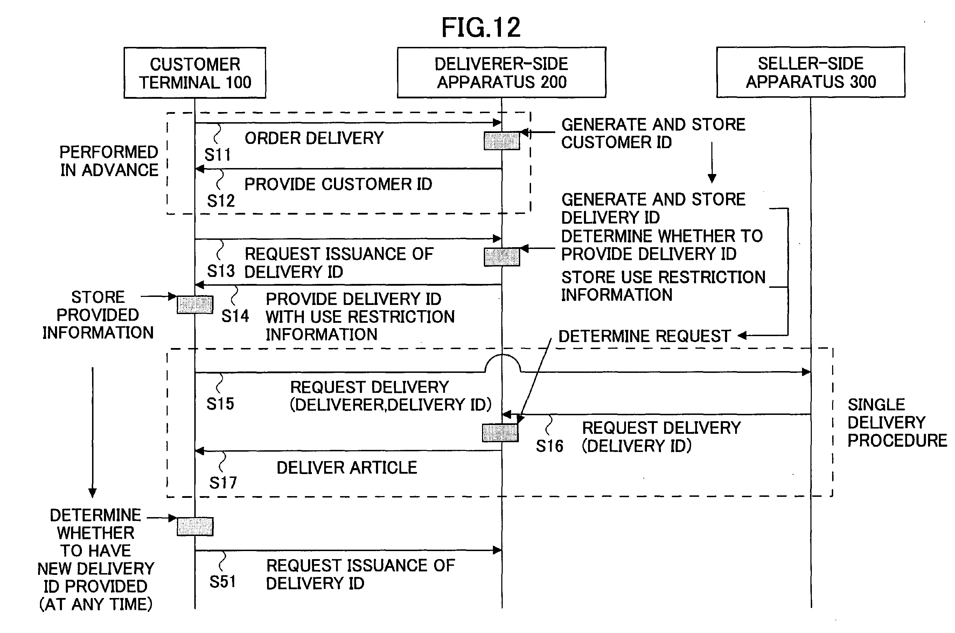

Next, a description is given, with reference to FIG. 12, of an eighth embodiment according to the present invention.

The eighth embodiment is an improvement on the fourth embodiment. FIG. 12 is a sequence diagram for illustrating an operation of the article delivery system according to the eighth embodiment. In FIG. 12, the same elements as those of FIG. 8 are referred to by the same numerals, and a description thereof is omitted.

According to the eighth embodiment, as in the above-described seventh embodiment, the delivery ID is correlated with its use restriction information when the deliverer-side apparatus 200 provides the delivery ID to the customer terminal 100 in step S14. Then, the delivery ID issuance request part 106 of the customer terminal 100 accesses the delivery ID-related information storage part 109 at any time, and determines whether to have a new delivery ID provided based on the use restriction information of the stored delivery ID. As a result, if it is determined that a new delivery ID is to be provided, in step S51, the delivery ID issuance request part 106 makes a delivery ID issuance request to the deliverer-side apparatus 200 via the communication part 101. Consequently, the same effect as in the seventh embodiment can be produced.

### [Ninth Embodiment]

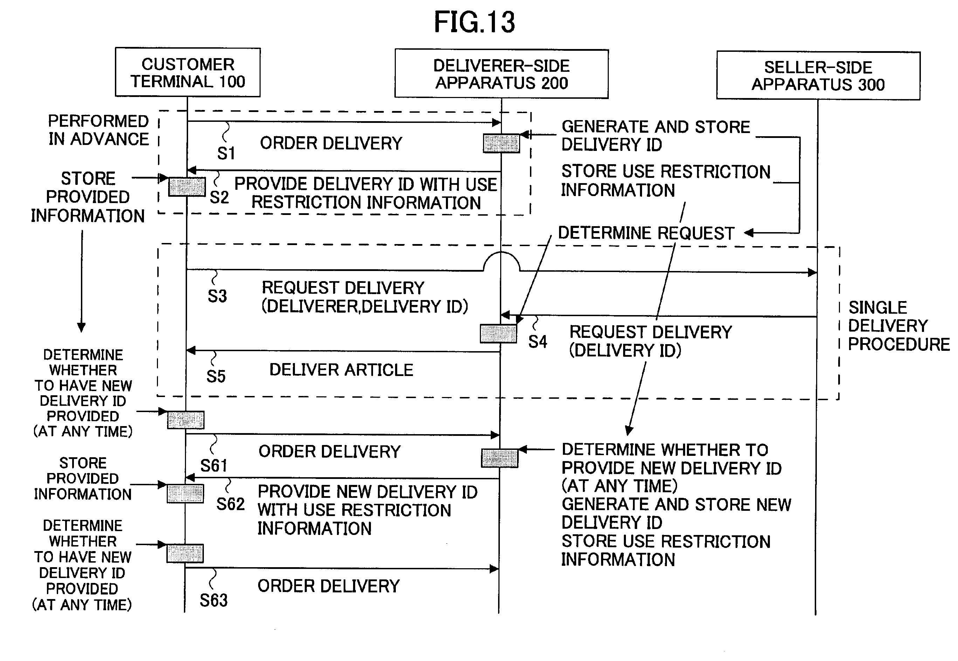

Next, a description is given, with reference to FIG. 13, of a ninth embodiment according to the present invention.

The ninth embodiment is a combination of the fifth and seventh embodiments. FIG. 13 is a sequence diagram for illustrating an operation of the article delivery system according to the ninth embodiment.

Referring to FIG. 13, receiving the delivery ID with its use restriction information provided in step S2, the delivery order part 102 of the customer terminal 100 accesses the delivery ID-related information storage part 109 at any time, and determines whether to have a new delivery ID provided based on the use restriction information of the delivery ID stored therein. As a result, if it is determined that a new delivery ID is to be provided, in step S61, the delivery order part 102 places an order with the deliverer-side apparatus 200 for delivery via the communication part 101.

When the customer places the delivery order, the delivery ID provision determination part 208 of the deliverer-side apparatus 200 determines according to a criterion whether to provide a new delivery ID to the customer having the delivery ID based on the delivery ID-related information in which the delivery ID and its use restriction information are correlated, the delivery ID-related information being stored in the delivery ID-related information storage part 211 at the time of providing the delivery ID. If it is determined that a new delivery ID is to be provided, the delivery ID generation part 209 generates a new delivery ID, and in step S62, the new delivery ID is provided to the customer with its use restriction information.

Thereafter, receiving the delivery ID with its use restriction information provided in step S62, the delivery order part 102 of the customer terminal 100 accesses the delivery ID-related information storage part 109 at any time, and determines whether to have a new delivery ID provided based on the use restriction information of the delivery ID stored therein. As a result, if it is determined that a new delivery ID is to be provided, in step S63, the delivery order part 102 places an order with the deliverer-side apparatus 200 for delivery via the communication part 101.

Thus, according to the ninth embodiment, the merits of the fifth and seventh embodiments can be obtained.

### [Tenth Embodiment]

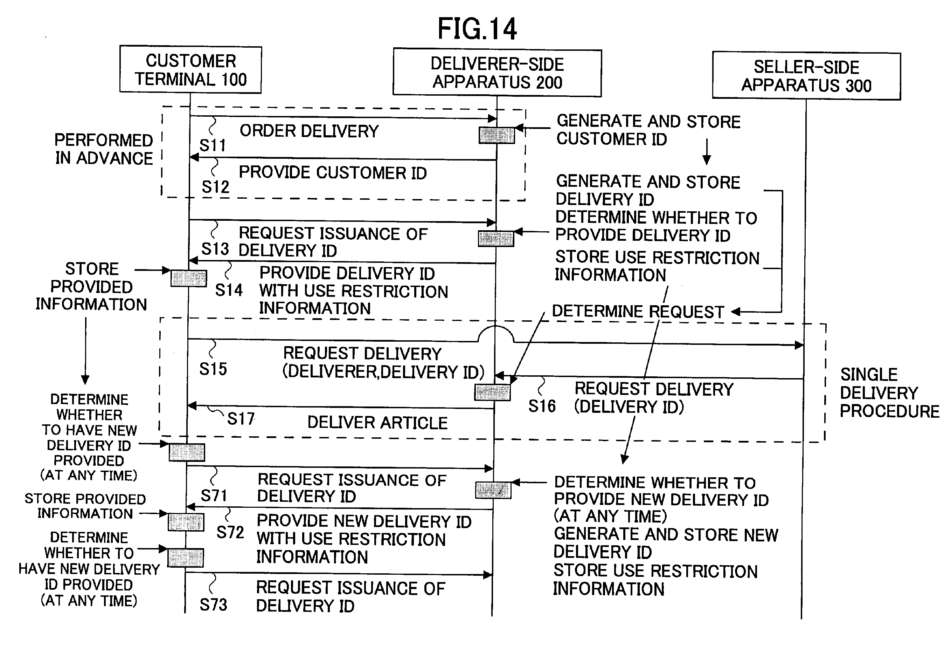

Next, a description is given, with reference to FIG. 14, of a tenth embodiment according to the present invention.

The tenth embodiment is a combination of the sixth and eighth embodiments. FIG. 14 is a sequence diagram for illustrating an operation of the article delivery system according to the tenth embodiment.

Referring to FIG. 14, the delivery ID is correlated with its use restriction information when the deliverer-side apparatus 200 provides the delivery ID to the customer terminal 100 in step S14. Then, the delivery ID issuance request part 106 of the customer terminal 100 accesses the delivery ID-related information storage part 109 at any time, and determines whether to have a new delivery ID provided based on the use restriction information of the stored delivery ID. As a result, if it is determined that a new delivery ID is to be provided, in step S71, the delivery ID issuance request part 106 makes a delivery ID issuance request to the deliverer-side apparatus 200 via the communication part 101.

Then, the delivery ID provision determination part 208 of the deliverer-side apparatus 200 determines, at any time, whether to provide a new delivery ID based on the use restriction information of the delivery ID stored in the delivery ID-related information storage part 211. If it is determined that a new delivery ID is to be provided, the delivery ID generation part 209 generates a new delivery ID, and in step S72, the new delivery ID is provided to the customer with its use restriction information.

Thereafter, receiving the delivery ID with its use restriction information provided in step S72, the delivery ID issuance request part 106 of the customer terminal 100 accesses the delivery ID-related information storage part 109 at any time, and determines whether to have a new delivery ID provided based on the use restriction information of the delivery ID stored therein. As a result, if it is determined that a new delivery ID is to be provided, in step S73, the delivery ID issuance request part 106 makes a delivery ID issuance request to the deliverer-side apparatus 200 via the communication part 101.

Thus, according to the tenth embodiment, the merits of the sixth and eighth embodiments can be obtained.

As described above, according to the present invention, the seller-side apparatus 300 requested by the customer to deliver an article of commerce is informed of the delivery ID provided from the deliverer-side apparatus 200. As a result, the seller is prevented from obtaining the personal information of the customer, such as her/his address. Further, the delivery ID may be updated in a timely manner. As a result, it is difficult for the seller to identify the customer. Accordingly, even if the customer requests an unspecified number of sellers to deliver articles of commerce, it is possible to prevent leakage of the personal information of the customer. Thus, a highly secure delivery service can be provided.

### [Variations]

The present invention is not limited to the specifically disclosed embodiments, and variations and modifications may be made without departing from the scope of the present invention. For instance, the following variations may be made.
(a) In the above-described embodiments, an order for delivery of an article of commerce is placed using the customer terminal 100. Alternatively, the delivery order may be made using the deliverer-side apparatus 200 installed on the deliverer side.
(b) In the above-described embodiments, the customer terminal 100, the deliverer-side apparatus 200, and the seller-side apparatus 300 are connected to the network such as the Internet so as to perform communications with one another. Alternatively, the customer terminal 100, the deliverer-side apparatus 200, and the seller-side apparatus 300 may communicate directly with one another by wire or radio. Further, an apparatus on the customer side according to the present invention is not limited to a mobile terminal such as the customer terminal 100, but may be a computer installed at the customer's home.
(c) In the above-described embodiments, if an article of commerce whose delivery has been requested is digital content, the content is distributed to the customer terminal 100. However, the customer terminal 100 is not the sole destination (address) to which the content may be delivered. For instance, a computer or a home server installed at the customer's home may be specified as a destination to which an article of commerce is delivered, and the content may be distributed to the specified destination. Further, the digital content may also be attached to an e-mail message to be distributed to the specified location.
(d) The information exchanged between the customer terminal 100 and the deliverer-side apparatus 200 is highly confidential personal information. Accordingly, the information may be exchanged by encrypted communications so that the information can be decrypted only by the customer terminal 100 and the deliverer-side apparatus 200. This reduces the risk that the information exchanged via the Internet may be intercepted by a third party.

The present application is based on Japanese priority patent application No. 2003-142085, filed on May 20, 2003, the entire contents of which are hereby incorporated by reference.

## Claims

1. A method of delivering an article of commerce using a customer apparatus on a customer side, a seller-side apparatus on a seller side, and a deliverer-side apparatus on a deliverer side, the method comprising the steps of:
(a) the customer apparatus transmitting an order for delivery of the article to the deliverer-side apparatus;
(b) the deliverer-side apparatus generating a delivery ID based on said order and transmitting the delivery ID to the customer apparatus;
(c) the customer apparatus transmitting to the seller-side apparatus a request for the delivery of the article based on the delivery ID received from the deliverer-side apparatus;
(d) the seller-side apparatus transmitting a request for the delivery of the article to the deliverer-side apparatus using the delivery ID obtained from the request received from the customer apparatus;
(e) the deliverer-side apparatus determining a destination to which the article is to be delivered based on the delivery ID obtained from the request received from the seller-side apparatus; and
(f) the deliverer-side apparatus implementing a procedure for delivering the article to the determined destination.

2. The method as claimed in claim 1, wherein the deliverer-side apparatus stores delivery ID-related information relating to the generated delivery ID, determines whether the article whose delivery is requested is deliverable based on the delivery ID obtained from the request transmitted from the seller-side apparatus and the stored delivery ID-related information, and implements the procedure for delivering the article to the destination determined based on the delivery ID if the article is determined to be deliverable.

3. The method as claimed in claim 2, wherein the delivery ID-related information relates further to use restriction information indicating a restriction on use of the generated delivery ID.

4. The method as claimed in claim 3, wherein the deliverer-side apparatus determines whether to transmit a new delivery ID to the customer apparatus based on the delivery ID-related information, and generates the new delivery ID when it is determined that the new delivery ID is to be transmitted.

5. The method as claimed in claim 2, wherein the deliverer-side apparatus determines whether to transmit a new delivery ID to the customer apparatus based on the delivery ID-related information, and generates the new delivery ID when it is determined that the new delivery ID is to be transmitted.

6. The method as claimed in claim 2, wherein the deliverer-side apparatus determines whether to update the delivery ID based on the delivery ID-related information, and updates the delivery ID and transmits the updated delivery ID to the customer apparatus when it is determined that the delivery ID is to be updated.

7. The method as claimed in claim 2, wherein:
the deliverer-side apparatus generates a customer ID based on the order transmitted from the customer apparatus, stores customer ID-related information relating to the generated customer ID, and transmits the generated customer ID to the customer apparatus;
the customer apparatus transmits to the deliverer-side apparatus a request for issuance of the delivery ID based on the customer ID received from the deliverer-side apparatus; and
the deliverer-side apparatus generates the delivery ID based on said request received from the customer apparatus, determines whether to transmit the delivery ID to the customer apparatus based on the customer ID obtained from said request received from the customer apparatus and the stored customer ID-related information, and transmits the delivery ID to the customer apparatus if it is determined that the delivery ID is to be transmitted.

8. The method as claimed in claim 1, wherein:
the deliverer-side apparatus generates a customer ID based on the order transmitted from the customer apparatus, stores customer ID-related information relating to the generated customer ID, and transmits the generated customer ID to the customer apparatus;
the customer apparatus transmits to the deliverer-side apparatus a request for issuance of the delivery ID based on the customer ID received from the deliverer-side apparatus; and
the deliverer-side apparatus generates the delivery ID based on said request received from the customer apparatus, determines whether to transmit the delivery ID to the customer apparatus based on the customer ID obtained from said request received from the customer apparatus and the stored customer ID-related information, and transmits the delivery ID to the customer apparatus if it is determined that the delivery ID is to be transmitted.

9. The method as claimed in claim 8, wherein:
the deliverer-side apparatus correlates the generated delivery ID with use restriction information indicating a restriction on use of the delivery ID, and transmits the delivery ID with the use restriction information to the customer apparatus; and
the customer apparatus stores the use restriction information received from the deliverer-side apparatus, determines whether to place a new order for delivery of the article based on the stored use restriction information, and transmits the new order to the deliverer-side apparatus if it is determined that the new order is to be placed.

10. The method as claimed in claim 9, wherein the customer apparatus determines whether to make a request for issuance of a new delivery ID based on the use restriction information, and transmits said request to the deliverer-side apparatus based on the customer ID if it is determined that said request is to be made.

11. The method as claimed in claim 8, wherein:
the deliverer-side apparatus correlates the generated delivery ID with use restriction information indicating a restriction on use of the delivery ID, and transmits the delivery ID with the use restriction information to the customer apparatus; and
the customer apparatus stores the use restriction information received from the deliverer-side apparatus, determines whether to make a request for issuance of a new delivery ID based on the use restriction information, and transmits said request to the deliverer-side apparatus based on the customer ID if it is determined that said request is to be made.

12. The method as claimed in claim 1, wherein:
the deliverer-side apparatus correlates the generated delivery ID with use restriction information indicating a restriction on use of the delivery ID, and transmits the delivery ID with the use restriction information to the customer apparatus; and
the customer apparatus stores the use restriction information received from the deliverer-side apparatus, determines whether to place a new order for delivery of the article based on the stored use restriction information, and transmits the new order to the deliverer-side apparatus if it is determined that the new order is to be placed.

13. The method as claimed in claim 1, wherein the customer apparatus, the deliverer-side apparatus, and the seller-side apparatus are connected directly or via a network.

14. An apparatus on a deliverer side capable of implementing a procedure for delivering an article of commerce, comprising:
a delivery order reception part configured to receive an order for delivery of the article;
a delivery ID generation part configured to generate a delivery ID based on the received order;
a delivery ID provision part configured to transmit the delivery ID to a customer apparatus on a customer side;
a delivery request reception part configured to receive a request for the delivery of the article;
a delivery destination determination part configured to determine a destination to which the article is to be delivered based on the delivery ID obtained from the request for the delivery of the article; and
a delivery implementation part configured to implement the procedure for delivering the article to the determined destination.

15. An apparatus on a customer side capable of implementing a procedure for delivering an article of commerce, comprising:
a delivery request part configured to transmit to a seller-side apparatus on a seller side a request for delivery of the article based on a delivery ID.

16. A system for delivering an article of commerce, comprising:
a customer apparatus on a customer side;
a deliverer-side apparatus on a deliverer side; and
a seller-side apparatus on a seller side, wherein:
the deliverer-side apparatus includes:
a delivery order reception part configured to receive an order for delivery of the article from the customer apparatus;
a delivery ID generation part configured to generate a delivery ID based on the received order;
a delivery ID provision part configured to transmit the delivery ID to the customer apparatus;
a delivery request reception part configured to receive a request for the delivery of the article from the seller-side apparatus;
a delivery destination determination part configured to determine a destination to which the article is to be delivered based on the delivery ID obtained from said request received from the seller-side apparatus; and
a delivery implementation part configured to implement the procedure for delivering the article to the determined destination;
the customer apparatus includes:
a delivery order part configured to generate and transmit the order for the delivery of the article to the deliverer-side apparatus; and
a delivery request part configured to generate and transmit to the seller-side apparatus a request for the delivery of the article based on the delivery ID received from the deliverer-side apparatus;
the seller-side apparatus includes a delivery request part configured to generate and transmit to the deliverer-side apparatus the request for the delivery of the article using the delivery ID obtained from said request received from the customer apparatus; and
the customer apparatus, the deliverer-side apparatus, and the seller-side apparatus are connected via a network using an electrical signal.
